# EUROPÄISCHE PATENTSCHRIFT

(11) **EP 3 500 750 B1**
(45) Veröffentlichungstag und Bekanntmachung des Hinweises auf die Patenterteilung: **05.05.2021**
(21) Anmeldenummer: 17758835.7
(22) Anmeldetag: 18.08.2017
(51) Int. Cl.: F03D 3/04

(54) **WINDKRAFTANLAGE MIT VERTIKALROTOR UND EINLEITFLÄCHENKONSTRUKTION**
WIND TURBINE WITH VERTICAL ROTOR AND INLET SURFACE CONSTRUCTION
ÉOLIENNE AVEC ROTOR VERTICAL ET CONSTRUCTION DE SURFACE D'ADMISSION

(30) Priorität: 22.08.2016 DE 202016104589 U
(43) Veröffentlichungstag der Anmeldung: 26.06.2019
(73) Patentinhaber: VDX Germany GmbH, 42115 Wuppertal (DE)
(72) Erfinder: WAGENKNECHT, Markus, 17498 Dersekow (DE)
(74) Vertreter: Patent- und Rechtsanwälte Dr. Solf & Zapf
(86) Internationale Anmeldenummer: PCT/EP2017/070952
(87) Internationale Veröffentlichungsnummer: WO 2018/036926

(56) Entgegenhaltungen:
- CH-A2- 704 828
- DE-A1-102014 010 920
- US-A1- 2009 136 346
- US-A1- 2010 034 649
- US-A1- 2016 230 742
- SCHILPENOORD P ET AL: "TURBINE IN DE ACHTERTUIN", INGENIEUR, KIVI. DEN HAAG, NL, Bd. 16, 22. September 2006 (2006-09-22), Seite 35, XP001540050, ISSN: 0020-1146

## Beschreibung

Die Erfindung betrifft eine Windkraftanlage zur Energieerzeugung durch Frontalanströmung aufweisend einen Stator und mindestens einen durch einen Vertikalrotor angetriebenen Generator, wobei der Vertikalrotor um eine vertikale Drehachse drehbar mit dem Stator verbunden ist, wobei an dem Vertikalrotor mindestens drei mittels einer Verbindungsvorrichtung befestigte Rotorflügel angeordnet sind, wobei die Rotorflügel an der Verbindungsvorrichtung für eine gleiche Drehrichtung ausgerichtet sind, und wobei der Stator eine Einleitflächenkonstruktion mit mindestens vier Innenflächen aufweist, die den Vertikalrotor umrahmen.

Eine Windkraftanlage der vorgenannten Art ist beispielsweise aus der Offenlegungsschrift US 2010/034649 A1 bekannt. Ein weiteres Beispiel ist aus DE 199 57 141 A1 bekannt. Die Rotorflügel sind hierbei als hakenförmige Windfangleisten ausgebildet, und zwei der vier Innenflächen der Einleitflächenkonstruktion sind derart als seitliche Innenflächen ausgebildet, dass sie jeweils an ihrer Außenseite bis zum hinteren Teil des Diffusors gerade verlaufen und danach eine Krümmung nach außen aufweisen. Zudem ist bei dieser Windkraftanlage vorgesehen, dass stets zwei Vertikalrotoren nach dem Grundprinzip der Durchströmung angetrieben werden.

Die vorgenannte Windkraftanlage hat den Vorteil, dass sie die Frontalanströmung des Windes durch die Einleitflächenkonstruktion in den Bereich der Vertikalrotoren leitet. Die Windkraftanlage benötigt allerdings frontal einströmenden Wind mit einer Windgeschwindigkeit von mindestens 1,5 m/s, um die kinetische Energie der Frontalanströmung über den Generator in elektrische Energie umzuwandeln.

Der Erfindung liegt die Aufgabe zugrunde, eine Windkraftanlage der eingangs genannten Art zu schaffen, die bei möglichst kleinen Windgeschwindigkeiten die kinetische Energie der Frontalanströmung über den Generator besonders effizient in elektrische Energie umwandelt.

Die Aufgabe wird erfindungsgemäß in einer ersten Ausführungsform durch die Merkmale des kennzeichnenden Teils des Anspruchs 1 gelöst. Dadurch, dass die Rotorflügel im horizontalen Querschnitt tragflächenartig ausgebildet sind und die Einleitflächenkonstruktion zwei sich gegenüberliegende, im horizontalen Querschnitt tragflächenartige, vertikal angeordnete Statorflügel und zwei sich gegenüberliegende, horizontal angeordnete Statorflügel umfasst, wobei die Statorflügel derart ausgebildet und angeordnet sind, dass sie einen durch die Frontalanströmung erzeugten und durch die Einleitflächenkonstruktion des Stators strömenden Luftstrom zumindest in einem entlang der Innenflächen der vertikal angeordneten Statorflügel verlaufenden Randbereich beschleunigen, wobei der Randbereich eine horizontal und senkrecht zur Frontalanströmung verlaufende Breite aufweist, die gleich oder kleiner eines Betrages eines horizontal und senkrecht zur Frontalanströmung breitesten Abschnitts der vertikal angeordneten Statorflügel ist, wobei die Rotorflügel derart an einem äußeren Rand des Vertikalrotors angeordnet und ausgebildet sind, dass die Rotorflügel während einer Rotation des Vertikalrotors vollständig in den jeweiligen Randbereich des Stators eintauchen, wird die minimal benötigte Windgeschwindigkeit reduziert, so dass bereits ein Wind mit einer relativ kleinen Windgeschwindigkeit, z.B. 0,5 m/s, ausreicht, um die kinetische Energie der Frontalanströmung über den Generator in elektrische Energie umzuwandeln.

Die radial am äußeren Rand des Vertikalrotors angeordneten Rotorflügel haben wegen ihres radialen Abstands zur Drehachse einen relativ langen Hebelarm und führen somit zu einem großen Drehmoment. Das Drehmoment ist ein Produkt aus der Länge des Hebelarms und der Windkraft. Durch den relativ langen Hebelarm kann der Vertikalrotor bereits bei einer relativ kleinen Windgeschwindigkeit über die Rotorflügel in Bewegung gesetzt werden.

Weiterhin wird die Effizienz der Windkraftanlage durch die tragflächenartige Ausgestaltung der Rotorflügel erhöht, wobei durch die Tragflächenform bei entsprechendem Luftstrom die Drehbewegung des Vertikalrotors erfolgt. Diese Drehbewegung resultiert somit aus den Tragflächenformen, die das strömungsmechanisch dynamische Auftriebsprinzip nutzen.

Nach dem gleichen Auftriebsprinzip erfolgt eine Beschleunigung der Luftströmung an den inneren Randbereichen der Statorflügel. Dadurch wird der Vertikalrotor durch ein zweistufiges Auftriebsprinzip in seine Drehbewegung gebracht.

Insbesondere bei einer Kombination der vorgenannten Merkmale reicht eine mit einer Windgeschwindigkeit von z.B. 0,5 m/s auf die Rotorflügel strömende Windkraft aus, um den Vertikalrotor über die Rotorflügel in Bewegung zu setzen.

Weiterhin wird die Aufgabe erfindungsgemäß in einer zweiten Ausführungsform durch die Merkmale des kennzeichnenden Teils des Anspruchs 2 gelöst. Dadurch, dass die Rotorflügel über eine in der Verbindungsvorrichtung gelagerte und vertikal angeordnete Schwenkachse von einer Ausgangsstellung bei Stillstand des Vertikalrotors in eine Maximalstellung schwenken, wobei die Rotorflügel ihre Maximalstellung bei Erreichen einer definierten Rotationsgeschwindigkeit des Vertikalrotors einnehmen, kann die Rotorstellung an die Windgeschwindigkeit des einströmenden Windes angepasst werden. Demnach kann das Anlaufen der Drehbewegung des Vertikalrotors unter Einfluss der strömungsmechanisch segelartigen Ausgangsstellung der Rotorflügel erfolgen, wohingegen der Luftwiderstand der Rotorflügel bei anhaltender Rotationsgeschwindigkeit unter Einfluss der strömungsmechanisch vorteilhaften Maximalstellung der Rotorflügel reduziert werden kann. Dies ermöglicht eine flexible Anpassung der Stellung der Rotorflügel, so dass niedrige Windgeschwindigkeiten effektiver genutzt werden können und die Windkraftanlage vor Beschädigungen durch hohe Windgeschwindigkeiten geschützt wird.

Besonders bevorzugt weist die Windkraftanlage der zweiten Ausführungsform zusätzlich die Merkmale der Windkraftanlage der ersten Ausführungsform auf. Bevorzugt weisen die Rotorflügel eine in Drehrichtung weisende vordere Flügelspitze und eine der Drehrichtung abgewandte hintere Flügelspitze auf. Dabei sind die schwenkbar ausgebildeten Rotorflügel jeweils derart schwenkbar über die Verbindungsvorrichtung an dem Vertikalrotor gelagert, dass sich der radiale Abstand der hinteren Flügelspitze des jeweiligen Rotorflügels zur Drehachse mit steigender Rotationsgeschwindigkeit vergrößert. Die Schwenkbarkeit der Rotorflügel ermöglicht eine Anpassung der Position der Rotorflügel an die Windgeschwindigkeit. Ein geringer radialer Abstand der hinteren Flügelspitze des jeweiligen Rotorflügels zur Drehachse erleichtert das Anlaufen der Drehbewegung des Vertikalrotors, weil sich hieraus eine größere, anströmbare Fläche der jeweiligen Rotorflügel quer zur Anströmrichtung ergibt. Die Formulierung "quer" reduziert sich hierbei nicht auf einen rechten Winkel. Sobald eine definierte Rotationsgeschwindigkeit erreicht wird, wirkt diese Fläche allerdings abbremsend, weshalb der radiale Abstand der hinteren Flügelspitze des jeweiligen Rotorflügels zur Drehachse mit steigender Rotationsgeschwindigkeit zu vergrößern ist, um den Strömungswiderstand zu verringern. Auch in Folge dieses Merkmals reicht ein Wind mit einer kleinen Windgeschwindigkeit aus, um den Vertikalrotor in Bewegung zu versetzen.

Diese Wirkung lässt sich insbesondere dadurch verstärken, dass die Rotorflügel jeweils derart schwenkbar über die Verbindungsvorrichtung an dem Vertikalrotor gelagert sind, dass sich der radiale Abstand der vorderen Flügelspitze des jeweiligen Rotorflügels zur Drehachse mit steigender Rotationsgeschwindigkeit reduziert.

Vorzugsweise umfasst die Verbindungsvorrichtung zwei sich horizontal erstreckende Rotorscheiben, zwischen denen die Rotorflügel schwenkbar gelagert angeordnet sind. Vorteilhafterweise umfassen die Statorflügel jeweils eine Vertiefung zur vollständigen Aufnahme der Rotorscheiben, so dass die sich zugewandten Innenflächen der Rotorscheiben jeweils bündig mit den Innenflächen der Statorflügel abschließen. Dies ermöglicht eine Optimierung des Luftstroms im Inneren des Vertikalrotors.

Gemäß einer bevorzugten Ausführungsform der schwenkbaren Rotorflügel ist vorgesehen, dass die Rotorflügel mit steigender Rotationsgeschwindigkeit in Richtung der Maximalstellung unter Einwirkung von Zentrifugalkräften geschwenkt werden. Hierzu können beispielsweise Schwungmassen vorgesehen sein. Schwungmassen sind gezielt verteilte Masseschwerpunkte, um bei einer definierten Zentrifugalkraft eine zusätzliche Wirkung, in diesem Fall eine Bewegung der Rotorflügel, zu erzeugen. Die Stellungsänderung dient in der Ausgangsstellung der effizienten Energieausbeute des Windes bei kleinen Windgeschwindigkeiten und in der Maximalstellung als Schutz der Rotorflügel vor zu schneller Umdrehung des Vertikalrotors bei großen Windgeschwindigkeiten. Mit den Schwungmassen lässt sich die Stellung der Rotorflügel mit konstruktiv einfachen und kostengünstigen Mitteln anpassen.

Ebenfalls bevorzugt ist vorgesehen, dass die schwenkbaren Rotorflügel bei einer Windgeschwindigkeit der Frontalanströmung von kleiner gleich 3 m/s bis kleiner gleich 5 m/s durch auf die Rotorflügel wirkende Zentrifugalkraft entgegenwirkende Einzugsmittel in der Ausgangsstellung eingezogen oder gehalten werden. Besonders bevorzugt ist das Einzugsmittel hierbei eine Feder. Die Feder eignet sich insbesondere als Einzugsmittel, weil es sich hierbei um ein kostengünstiges Mittel handelt, das schnell ausgetauscht werden kann und bei entsprechender Auswahl eines geeigneten Federstahls einen langen Lebenszyklus aufweist.

Gemäß einer vorteilhaften Ausführungsform ist das mindestens eine Einzugsmittel derart eingestellt, dass die Rotorflügel bis zu einer Umdrehung des Vertikalrotors von kleiner gleich 60 bis kleiner gleich 80 Umdrehungen pro Minute in ihrer Maximalstellung verbleiben. Es hat sich gezeigt, dass im Rahmen dieser Werte die Rotorflügel in der Ausgangsstellung eine effiziente Energieausbeute des Windes bei kleinen Windgeschwindigkeiten aufweisen und in deren Maximalstellung vor zu schneller Umdrehung des Vertikalrotors bei großen Windgeschwindigkeiten geschützt sind.

Vorteilhafterweise nehmen die schwenkbaren Rotorflügel ab einer Windgeschwindigkeit der Frontalanströmung von größer gleich 3 m/s bis größer gleich 5 m/s eine Schwenkposition ein. Durch den Positionswechsel der Rotorflügelvergrößert sich mit steigender Rotationsgeschwindigkeit der radiale Abstand der hinteren Flügelspitze des jeweiligen Rotorflügels zur Drehachse.. Die Stellungsänderung der Rotorflügel im vorgenannten Intervall der Windgeschwindigkeiten erlaubt eine effiziente Energieausbeute der Frontalanströmung und gewährleistet gleichzeitig ein möglichst geringes Risiko der Komponentenschädigung bei großen Windgeschwindigkeiten.

Eine besonders vorteilhafte Ausgestaltung der Erfindung liegt darin, dass die Rotorflügel jeweils den gleichen Radialabstand von der Drehachse des Vertikalrotors aufweisen. Durch den jeweils gleichen Hebelarm ist die auf den Vertikalrotor wirkende Belastung durch die Fliehkraft der Rotorflügel möglichst gleichmäßig verteilt.

Für windschwache Gebiete ist vorteilhafterweise eine Ausführungsform der Erfindung vorgesehen, bei der die Rotorflügel jeweils einen symmetrischen, horizontalen Tragflächenquerschnitt entlang der Frontalanströmung aufweisen. Der symmetrische Aufbau der Rotorflügel erleichtert das Anlaufen des Vertikalrotors in windschwachen Regionen.

Für windstarke Gebiete ist insbesondere eine Ausführungsform vorgesehen, bei der die Rotorflügel jeweils einen derart asymmetrischen, horizontalen Tragflächenquerschnitt entlang der Frontalanströmung aufweisen, dass eine zur Drehachse radial außenliegende Tragflächenseite des Rotorflügels stärker ausgebaucht ist als eine radial innenliegende Tragflächenseite des Rotorflügels. Der asymmetrische Aufbau der Rotorflügel erlaubt eine höhere Ausbeute der kinetischen Energie des Windes durch das Auftriebsprinzip, wobei das Anlaufen allerdings schwergängiger erfolgt als bei einem symmetrischen Aufbau.

Weiterhin ist gemäß einer vorteilhaften Ausgestaltung der Erfindung vorgesehen, dass die Länge der Rotorflügel von ihrer vorderen Flügelspitze zu ihrer hinteren Flügelspitze jeweils mindestens ein Achtundvierzigstel und maximal ein Sechstel, bevorzugt ein Zwölftel eines Gesamtumfangs ihrer Kreislaufbahn beträgt. Diese Werte erlauben eine optimale Energieausbeute des durchströmenden Luftstroms bei gleichzeitiger Berücksichtigung des Luftwiderstands, der aus dem quer auf die Tragflächenseiten der Rotorflügel strömenden Luftstroms resultiert. Der Luftwiderstand sollte nicht derart groß werden, dass er die Bewegung des Vertikalrotors abbremst oder dass er durch die Fliehkraftwirkung schädigend auf die Komponenten des Vertikalrotors wirkt.

In einer weiteren Ausgestaltung der Erfindung sind Tragflächen der Rotorflügel (7) mechanisch verlängerbar oder verkürzbar ausgebildet. Vorzugsweise sind bei Windgeschwindigkeiten kleiner als 5,5 m/s bis 12 m/s, insbesondere 7 m/s, die Tragflächen maximal auseinandergeschoben und bei Windstärken größer als 5,5 m/s bis 12 m/s, insbesondere 7 m/s, maximal ineinandergeschoben.

Zudem ist ein möglicher Aufbau mehrerer Windkraftanlagen derart möglich, dass die Drehachsen mindestens zweier Vertikalrotoren parallel zueinander angeordnet sind. Gemäß dieser Ausgestaltung lassen sich mehrere Windkraftanlagen platzsparend nebeneinander platzieren, wodurch ein Windkraftpark beliebig um weitere Windkraftanlagen sukzessive erweitert werden kann, ohne dass die bereits montierten Windkraftanlagen verändert werden müssten.

Ein alternativer möglicher Aufbau mehrerer Windkraftanlagen kann derart gestaltet sein, dass die Drehachsen mindestens zweier Vertikalrotoren koaxial zueinander angeordnet sind. Gemäß dieser Ausgestaltung lassen sich mehrere Windkraftanlagen platzsparend aufeinander platzieren, wodurch ein Windkraftpark beliebig um weitere Windkraftanlagen sukzessive erweitert werden kann, ohne dass die bereits montierten Windkraftanlagen verändert werden müssten.

Ebenfalls können in einem Windkraftpark auch mindestens zwei Vertikalrotoren koaxial zueinander angeordnet sein und mindestens zwei Vertikalrotoren parallel zueinander angeordnet sein. Durch den möglichen Ausbau des Windkraftparks in die Höhe und die Breite durch einzelne Windkraftanlagen können die Windkraftanlagen individuell zu den Grundstückgegebenheiten positioniert werden, um eine möglichst große Energieausbeute zu ermöglichen.

Die Frontalanströmung lässt sich besonders effizient auf die Rotorflügel beschleunigen, wenn die Länge in Richtung der Frontalanströmung der äußersten vertikalen Statorflügel und/oder der äußersten horizontalen Statorflügel jeweils größer ist als der Durchmesser der Kreislaufbahn der jeweiligen Rotorflügel.

Nach einer vorteilhaften Ausführungsform der Erfindung weisen die Statorflügel der Einleitflächenkonstruktion in einem Grundzustand jeweils eine zur Drehachse radial außenliegende Tragflächenseite und eine zur Drehachse radial innenliegende Tragflächenseite auf, wobei die zur Drehachse radial innenliegenden Tragflächenseiten fixiert sind, und die jeweils zur Drehachse radial außenliegenden Tragflächenseiten der Statorflügel in einem Schwenkzustand jeweils um eine Längskante der jeweiligen Statorflügel im Eintrittsbereich der Frontalanströmung schwenkbar sind, um einen Trichter zu bilden. Durch die Verwendung des Trichters lässt sich die Frontalanströmung insbesondere bei kleiner Windgeschwindigkeit mit erhöhter Dichte und in der Folge mit erhöhter Geschwindigkeit in den Raum der Einleitflächenkonstruktion führen, wodurch eine Bewegung des Vertikalrotors bereits bei geringer Windgeschwindigkeit außerhalb der Einleitflächenkonstruktion ermöglicht wird. Eine besonders vorteilhafte Ausführungsform des Trichters zur Beschleunigung der Frontalströmung sieht vor, dass die sich gegenüberliegenden, zur Drehachse radial außenliegenden Tragflächenseiten als Trichter im Schwenkzustand einen Winkel einschließen, der zwischen 90° bis 125° beträgt.

Besonders bevorzugt weisen die den Trichter bildenden Tragflächenseiten Solarzellen auf. Insbesondere sind die Tragflächenseiten horizontal verstellbar ausgebildet. Gemäß dieser Ausführungsform kann somit selbst bei Windstille elektrische Energie generiert werden.

Um die Komponenten der Windkraftanlage vor Beschädigung durch zu starke Winde zu schützen, sieht eine bevorzugte Ausführungsform der Erfindung vor, dass die den Trichter bildenden Tragflächenseiten bei einer Windgeschwindigkeit der Frontalanströmung zwischen 2,5 bis 4 m/s, besonders bevorzugt zwischen 3 bis 3,5 m/s, in den Grundzustand der Statorflügel der Einleitflächenkonstruktion zurückschwenken.

Um die Kombination mehrerer Windkraftanlagen möglichst flexibel zu gestalten, kann jeder Vertikalrotor jeweils einen separaten Generator antreiben. Hierdurch können mehrere Windkraftanlagen unabhängig voneinander elektrische Energie erzeugen und um Einheiten von Windkraftanlagen ergänzt oder reduziert werden, ohne einen Einfluss aufeinander zu haben.

Gemäß einer bevorzugten Ausführungsform der Erfindung ist vorgesehen, dass die Windkraftanlage ein Schneckengetriebe aufweist, das zwischen dem Stator und einer Befestigungsvorrichtung angeordnet ist, um die Windkraftanlage dem Wind nachzuführen. Ein Schneckengetriebe besteht aus einer schraubenförmigen Schnecke, die bei Drehbewegung ein in diese greifendes Zahnrad, auch Schneckenrad genannt, dreht. Die Windkraftanlage ist durch das Schneckengetriebe auch ohne für Vertikalwindanlagen marktübliche Bremsen gegen ein Verstellen des Stators gesichert. Dieser technischen Wirkung liegt die Erkenntnis zu Grunde, dass ein Schneckenrad keine schraubenförmige Schnecke antreiben kann.

Eine vorteilhafte Ausführungsform der Erfindung sieht vor, dass eine zur Drehachse radial äußere Tragfläche des Rotorflügels in ihrem geringsten Abstand zu jeweils einer der beiden Innenflächen der beiden vertikal angeordneten Statorflügel zwischen 30 mm bis 110 mm beabstandet ist. Es hat sich herausgestellt, dass in diesem Bereich die größte Fließgeschwindigkeit des Windes innerhalb der Einleitflächenkonstruktion ist und die Rotorflügel am besten angetrieben werden.

Eine ebenfalls vorteilhafte Ausführungsform ist derart gestaltet, dass die Windkraftanlage bei einem Radius von einer zur Drehachse radial inneren Tragfläche des Rotorflügels zur Drehachse gleich oder kleiner 2,5 m bevorzugt drei Rotorflügel aufweist.

Die Windkraftanlage weist alternativ vorzugsweise bei einem Radius von einer zur Drehachse radial inneren Tragfläche des Rotorflügels zur Drehachse gleich oder größer 2,5 m insbesondere fünf Rotorflügel auf.

Ebenfalls bevorzugt sind die zwei sich gegenüberliegenden, horizontal angeordneten Statorflügel im vertikalen Querschnitt tragflächenartig ausgebildet. Durch die Tragflächengeometrie der horizontal angeordeten Statorflügel wird die Windgeschwindigkeit des Luftstroms im Stator gegenüber der Windgeschwindigkeit der zur Windkraftanlage äußeren Frontalanströmung weiter beschleunigt. Weiterhin betrifft die Erfindung eine Einleitflächenkonstruktion für eine Windkraftanlage nach mindestens einem der vorgenannten Merkmale.

Weitere vorteilhafte Ausgestaltungen der Erfindung ergeben sich aus der folgenden Figurenbeschreibung und den abhängigen Unteransprüchen.

### Es zeigen:

- Fig. 1: Horizontalschnitt einer erfindungsgemäßen Windkraftanlage mit Rotorflügeln in einer Maximalstellung,
- Fig. 2: Horizontalschnitt der erfindungsgemäßen Windkraftanlage mit den Rotorflügeln in einer Ausgangsstellung,
- Fig. 3: Horizontalschnitt der erfindungsgemäßen Windkraftanlage nach Fig. 1 mit ausgeschwenkten Statorflügeln,
- Fig. 4: Horizontalschnitt einer zweirotorigen Variante der Windkraftanlage nach Fig. 1,
- Fig. 5: Frontansicht der erfindungsgemäßen Windkraftanlage nach Fig. 1,
- Fig. 6: Frontansicht einer erfindungsgemäßen Windkraftanlage mit zwei vertikal zueinander angeordneten Vertikalrotoren,
- Fig. 7: Frontansicht einer erfindungsgemäßen Windkraftanlage nach Fig. 4 mit zwei parallel zueinander angeordneten Vertikalrotoren,
- Fig. 8: Frontansicht einer erfindungsgemäßen, nach Fig. 6 und 7 kombinierten Windkraftanlage,
- Fig. 9: Horizontalschnitt einer weiteren Ausführungsform einer erfindungsgemäßen Windkraftanlage mit Rotorflügeln in einer Maximalstellung,
- Fig. 10: Horizontalschnitt der erfindungsgemäßen Windkraftanlage nach Fig. 9 mit ausgeschwenkten Statorflügeln,
- Fig. 11: Horizontalschnitt einer zweirotorigen Variante der Windkraftanlage nach Fig. 9,
- Fig. 12: Frontansicht einer erfindungsgemäßen Windkraftanlage mit ausgeschwenkten und gedrehten Statorflügeln,
- Fig. 13: Frontansicht einer erfindungsgemäßen Windkraftanlage als zweirotorige Variante mit ausgeschwenkten und gedrehten Statorflügeln,
- Fig. 14: Frontansicht einer erfindungsgemäßen Windkraftanlage mit zwei vertikal zueinander angeordneten Vertikalrotoren und
- Fig. 15: Frontansicht einer erfindungsgemäßen Windkraftanlage mit zwei vertikal zueinander angeordneten zweirotorigen Varianten.

In den verschiedenen Figuren der Zeichnung sind gleiche Teile stets mit denselben Bezugszeichen versehen.

Zu der anschließenden Beschreibung wird beansprucht, dass die Erfindung nicht auf die Ausführungsbeispiele und dabei nicht auf alle oder mehrere Merkmale von beschriebenen Merkmalskombinationen beschränkt ist, vielmehr ist jedes einzelne Teilmerkmal des/jedes Ausführungsbeispiels auch losgelöst von allen anderen im Zusammenhang damit beschriebenen Teilmerkmalen für sich und auch in Kombination mit beliebigen Merkmalen eines anderen Ausführungsbeispiels von Bedeutung für den Gegenstand der Erfindung.

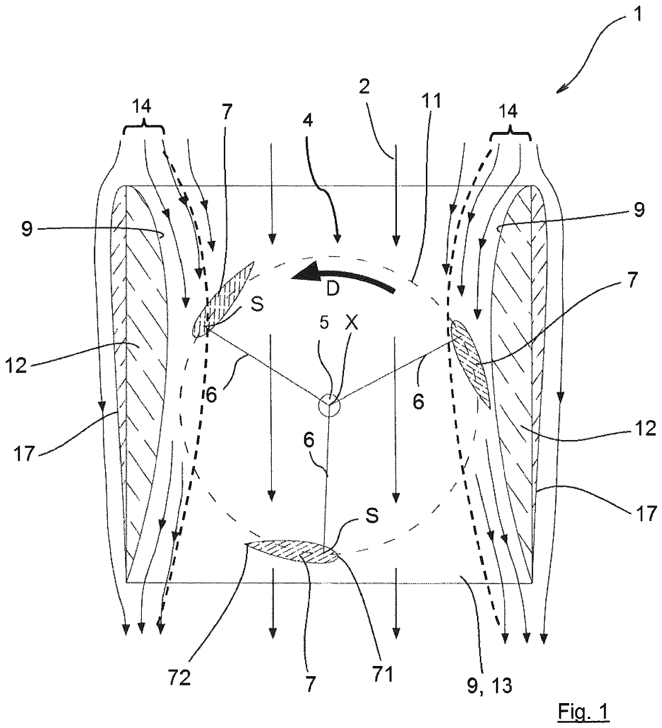

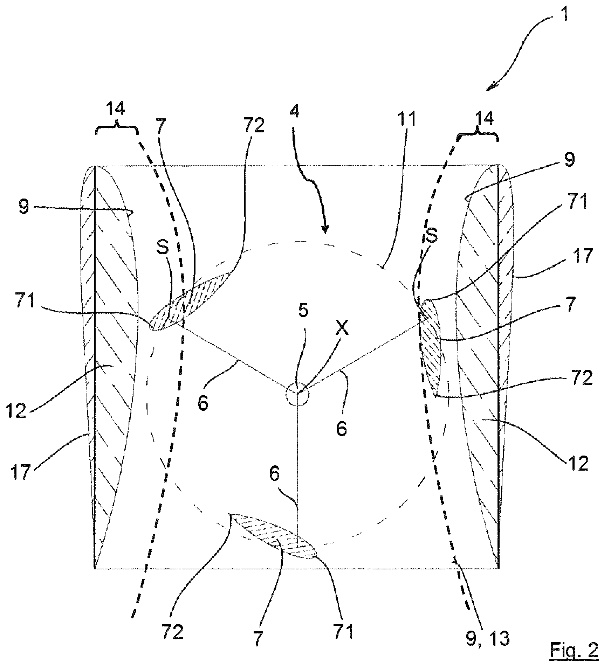

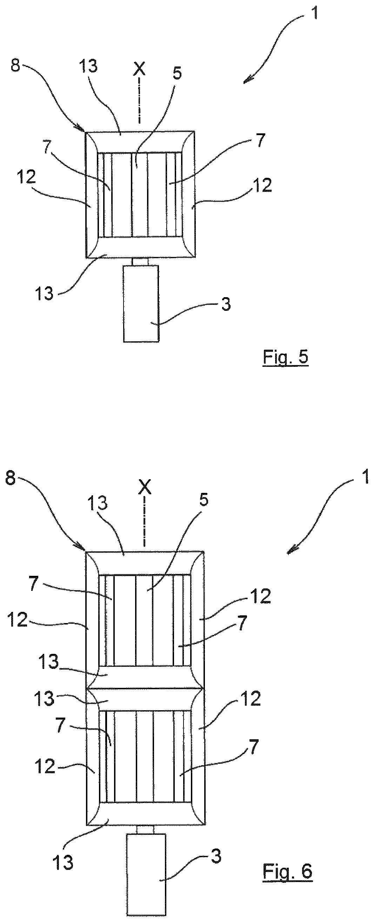

Fig. 1 und Fig. 2 zeigen einen Horizontalschnitt einer erfindungsgemäßen Windkraftanlage 1 zur Energieerzeugung durch Frontalanströmung 2. Die Windkraftanlage 1 umfasst einen Stator 3 und mindestens einen durch einen Vertikalrotor 4 angetriebenen, nicht dargestellten Generator. Gemäß Fig. 1 und Fig. 2 ist beispielhaft ein Vertikalrotor 4 dargestellt, der eine Welle 5 aufweist, an der mittels einer Verbindungsvorrichtung 6 beispielhaft drei Rotorflügel 7 angeordnet sind. Der Vertikalrotor 4 ist um eine vertikale Drehachse X drehbar mit dem Stator 3 verbunden. Die Rotorflügel 7 sind an der Verbindungsvorrichtung 6 für eine gleiche Drehrichtung D ausgerichtet. Der Stator 3 weist eine in Fig. 1 und 2 nicht vollständig dargestellte Einleitflächenkonstruktion 8 mit insbesondere vier Innenflächen 9 auf, die den Vertikalrotor 4 umrahmen. Die Rotorflügel 7 sind im horizontalen Querschnitt tragflächenartig ausgebildet. Die Einleitflächenkonstruktion 8 umfasst zwei sich gegenüberliegende, im horizontalen Querschnitt tragflächenartige, vertikal angeordnete Statorflügel 12. Vorteilhafterweise umfasst die Windkraftanlage 1 zwei sich gegenüberliegende, im vertikalen Querschnitt tragflächenartige, horizontal angeordnete Statorflügel 13. Die Statorflügel 12, 13 sind derart ausgebildet und angeordnet, dass sie einen durch die Frontalanströmung 2 erzeugten und durch die Einleitflächenkonstruktion 8 des Stators 3 strömenden Luftstrom in einem inneren Randbereich 14 der Statorflügel 12, 13 beschleunigen. Der Randbereich 14 ist über gestrichelte Linien dargestellt, die sich jeweils entlang der Oberfläche der vertikal angeordneten Statorflügel 12 erstrecken. Die gestrichelte Kreislinie in den Fig. 1, 2, 3 und 4 stellt eine Kreislaufbahn 11 der Rotorflügel 7 dar. Fig. 5 zeigt eine Vorderansicht auf eine Windkraftanlage nach Fig. 1.

Als Profil einer Tragfläche ist insbesondere ein im Wesentlichen tränenförmiges Profil zu verstehen, wobei die sich quer zur Erstreckungsachse gegenüberliegenden, Oberflächen ausgebaucht bzw. konvex ausgebildet sind.

Die Rotorflügel 7 können vorzugsweise über eine in der Verbindungsvorrichtung 6 gelagerte und vertikal angeordnete Schwenkachse S von einer Ausgangsstellung bei Stillstand des Vertikalrotors 4 in eine Maximalstellung schwenken. Die Maximalstellung ist beispielhaft in Fig. 1 dargestellt, wobei die Rotorflügel 7 ihre Maximalstellung insbesondere bei Erreichen einer definierten Rotationsgeschwindigkeit des Vertikalrotors 4 einnehmen. Die Ausgangsstellung ist beispielhaft in Fig. 2 dargestellt.

Gemäß den Fig. 1 und Fig. 2 können vorteilhafterweise die Rotorflügel 7 eine in Drehrichtung weisende vordere Flügelspitze 71 und eine der Drehrichtung abgewandte hintere Flügelspitze 72 aufweisen. Dabei sind die Rotorflügel 7 vorzugsweise jeweils derart schwenkbar über die Verbindungsvorrichtung 6 an dem Vertikalrotor 4 gelagert, dass sich der radiale Abstand der hinteren Flügelspitze 72 des jeweiligen Rotorflügels 7 zur Drehachse X mit steigender Rotationsgeschwindigkeit vergrößert. Besonders bevorzugt reduziert sich gleichzeitig der radiale Abstand der vorderen Flügelspitze 71 des jeweiligen Rotorflügels 7 zur Drehachse X mit steigender Rotationsgeschwindigkeit. Demnach ist die Rotationsgeschwindigkeit der Rotorflügel 7 bei der Stellung der Rotorflügel 7 nach Fig. 1 größer als bei der Stellung der Rotorflügel 7 nach Fig. 2.

Insbesondere erfolgt der Schwenkvorgang der Rotorflügel 7 mit steigender Rotationsgeschwindigkeit in Richtung der Maximalstellung unter Einwirkung von Zentrifugalkräften. Dabei können die Rotorflügel 7 vorzugsweise bei einer Windgeschwindigkeit der Frontalanströmung 2 von kleiner gleich 3 m/s bis kleiner gleich 5 m/s durch auf die Rotorflügel 7 wirkende Zentrifugalkraft entgegenwirkende Einzugsmittel in der Ausgangsstellung eingezogen oder gehalten werden. Vorliegend ist kein Einzugsmittel figürlich dargestellt. Allerdings bildet eine Feder ein bevorzugtes Einzugsmittel. Weiterhin vorteilhaft können die Rotorflügel 7 ab einer Windgeschwindigkeit der Frontalanströmung von größer gleich 3 m/s bis von größer gleich 5 m/s derart eine Schwenkposition einnehmen, dass sich der radiale Abstand der hinteren Flügelspitze 72 des jeweiligen Rotorflügels 7 zur Drehachse X mit steigender Rotationsgeschwindigkeit vergrößert..

Weiterhin ist in Fig.1 und Fig. 2 gezeigt, dass die Rotorflügel 7 bevorzugt jeweils den gleichen Radialabstand von der Drehachse X des Vertikalrotors 4 aufweisen. Durch die jeweils gleichen Hebelarme der einzelnen Rotorflügel 7 erfolgt eine gleichmäßig verteilte Belastung auf die Komponenten der Windkraftanlage 1.

Insbesondere für die Verwendung in Regionen mit geringen Windgeschwindigkeiten können die Rotorflügel 7 jeweils einen wie in den Fig. 1 und Fig. 2 dargestellten, symmetrischen, horizontalen Tragflächenquerschnitten entlang der Frontalanströmung 2 aufweisen.

Demgegenüber können insbesondere die Rotorflügel 7 für die Verwendung in Regionen mit großen Windgeschwindigkeiten jeweils einen derart asymmetrischen, horizontalen Tragflächenquerschnitt entlang der Frontalanströmung 2 aufweisen, dass eine zur Drehachse X radial außenliegende Tragflächenseite des Rotorflügels 7 stärker ausgebaucht ist als eine radial innenliegende Tragflächenseite des Rotorflügels 7.

Bevorzugt beträgt die entlang der Länge der Rotorflügel 7 von ihrer vorderen Flügelspitze 71 zu ihrer hinteren Flügelspitze 72 jeweils mindestens ein Achtundvierzigstel und maximal ein Sechstel, bevorzugt ein Zwölftel eines Gesamtumfangs ihrer Kreislaufbahn 11.

Weiterhin bevorzugt ermöglicht die erfindungsgemäße Windkraftanlage einen modularen Aufbau durch einzelne Module mit zueinander parallelen oder koaxialen Vertikalrotoren 4. Ein einzelnes Modul besteht hierbei aus jeweils einer separaten Windkraftanlage. Besonders bevorzugt treibt jeder Vertikalrotor 4 jeweils einen Generator an, so dass die Module ohne einen technisch komplexen Aufbau auf- bzw. abgerüstet werden können.

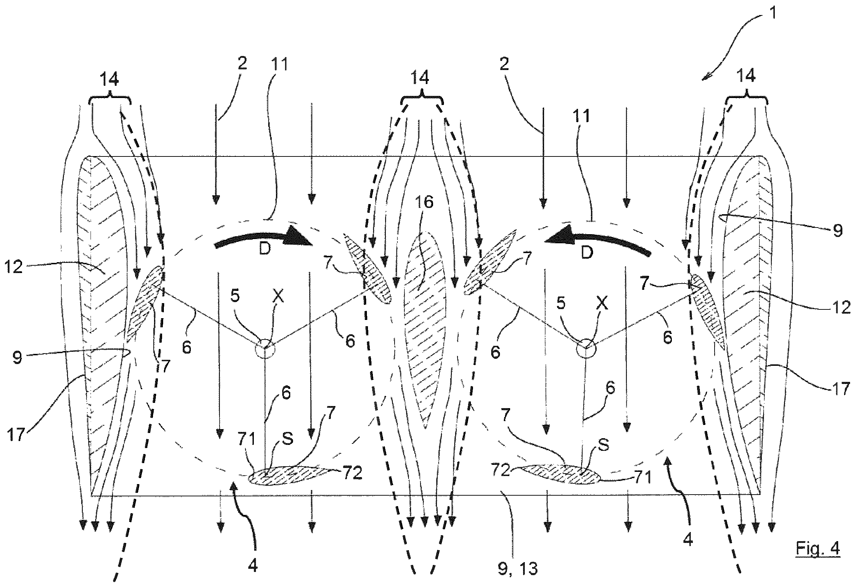

Gemäß den Fig. 4, 7 und 8 sind z.B. die Drehachsen X zweier Vertikalrotoren 4 parallel zueinander angeordnet. Dabei teilen sich die beiden Vertikalrotoren 4 einen gemeinsamen vertikalen Statorflügel 12, der einen symmetrischen, horizontalen Tragflächenschnitt entlang der Frontalanströmung 2 aufweist. Besonders bevorzugt weisen die beiden Vertikalrotoren 4 aufeinanderfolgend abwechselnde Drehrichtungen D auf. Durch die aufeinanderfolgend abwechselnden Drehrichtungen wirken auf die Komponenten der Windkraftanlage 1 möglichst gleichmäßig verteilte Kräfte.

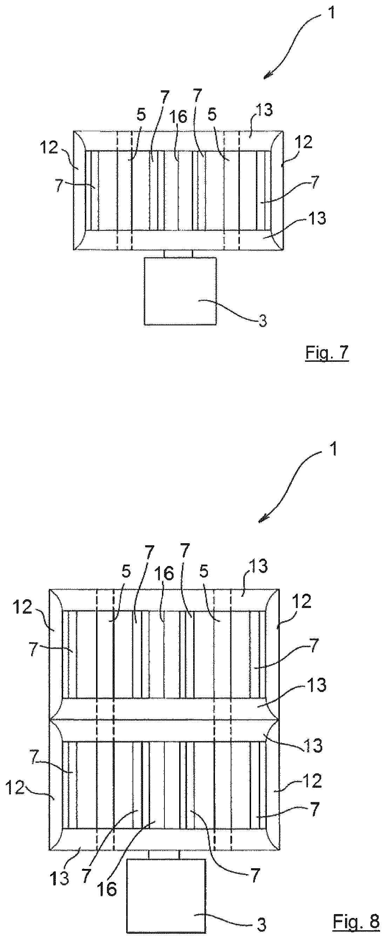

Gemäß den Fig. 6 und 8 sind beispielhaft die Drehachsen X zweier Vertikalrotoren 4 koaxial zueinander angeordnet, wobei die beiden Vertikalrotoren 4 einen gemeinsamen horizontalen Statorflügel teilen, der einen symmetrischen vertikalen Tragflächenschnitt entlang der Frontalanströmung aufweist.

Insbesondere ist die Länge in Richtung der Frontalanströmung 2 der äußersten vertikalen Statorflügel 12 größer als der Durchmesser der Kreislaufbahn 11 der jeweiligen Rotorflügel 7. Dies geht besonders aus dem Ausführungsbeispiel der Fig. 4 hervor. Ebenfalls vorteilhaft ist die Länge in Richtung der Frontalanströmung 2 der äußersten horizontalen Statorflügel 12 größer als der Durchmesser der Kreislaufbahn 11 der jeweiligen Rotorflügel 7. Hierzu gibt es keine figürliche Darstellung.

Bevorzugt weisen die Statorflügel 12, 13 der Einleitflächenkonstruktion 8 in einem Grundzustand jeweils eine zur Drehachse X radial außenliegende Tragflächenseite 17 und die zur Drehachse X radial innenliegende, als Tragflächenseite ausgebildete Innenfläche 9 auf.

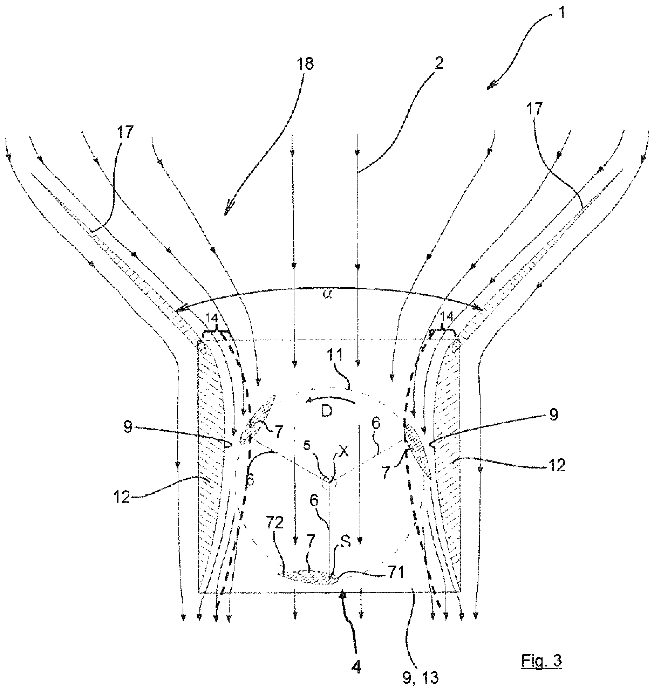

Besonders bevorzugt und in Fig. 3 dargestellt sind die zur Drehachse X radial innenliegenden Innenflächen 9 fixiert. Die jeweils zur Drehachse X radial außenliegenden Tragflächenseiten 17 der beispielhaft vertikal angeordneten Statorflügel 12 sind in einem Schwenkzustand jeweils um eine Längskante der jeweiligen Statorflügel 12 im Eintrittsbereich der Frontalanströmung 2 schwenkbar, um einen Trichter 18 zu bilden. Möglich ist diese schwenkbare Ausbildung für die vertikal angeordneten Statorflügel 12 und/oder für die horizontal angeordneten Statorflügel 13, wobei eine gemeinsame schwenkbare Ausbildung die größte Energieumwandlung der Frontalströmung 2 bedeutet.

Eine besonders große Energieumwandlung der Frontalströmung 2 erfolgt, wenn die sich gegenüberliegenden, zur Drehachse X radial außenliegenden Tragflächenseiten 17 als Trichter 18 im Schwenkzustand einen Winkel α einschließen, der zum Beispiel zwischen 90° bis 125° beträgt.

Insbesondere auf Inseln oder in Regionen mit unregelmäßig auftretendem Wind ist es vorteilhaft, wenn die den Trichter 18 bildenden Tragflächenseiten 17 Solarzellen aufweisen.

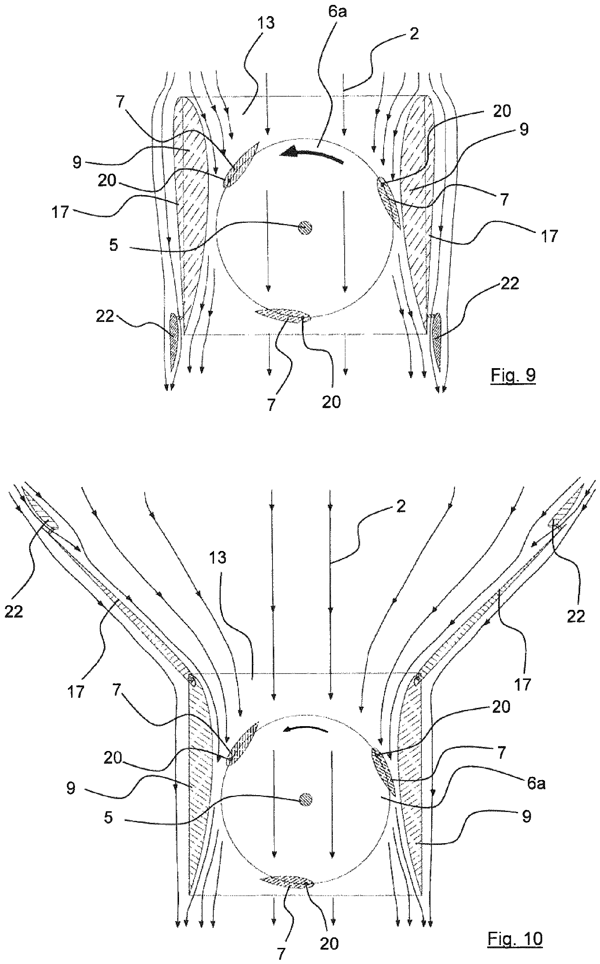

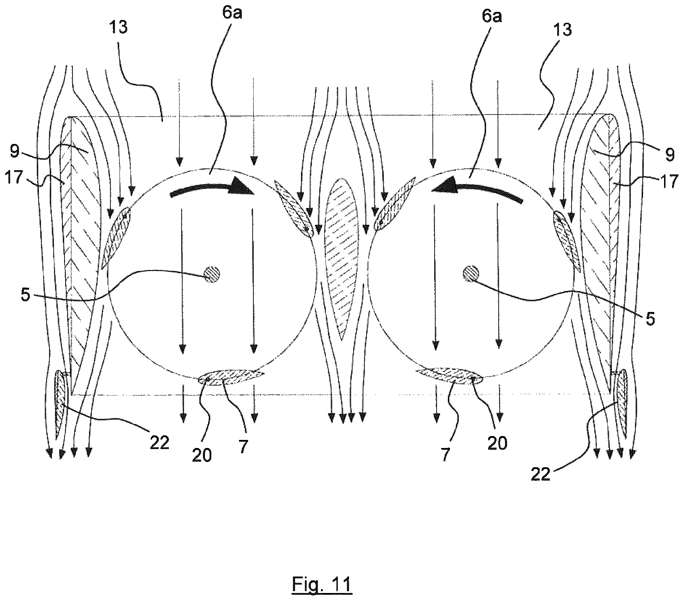

Fig. 9, Fig. 10 und Fig. 11 zeigen jeweils einen Horizontalschnitt weiterer Ausführungsformen einer erfindungsgemäßen Windkraftanlage. Die hier dargestellten Windkraftanlagen sind grundsätzlich wie die Windkraftanlagen gemäß Fig. 1 bis Fig. 4 aufgebaut, unterscheiden sich jedoch insbesondere in der Art der Verbindungsvorrichtung 6. Die Verbindungsvorrichtung 6 umfasst, als Alternative zu der Verbindungsvorrichtung 6 gemäß Fig. 1 bis Fig. 4, zwei sich horizontal erstreckende Rotorscheiben 6a, zwischen denen die Rotorflügel 7 schwenkbar gelagert angeordnet sind. Die Rotorflügel 7 sind vorzugsweise mittels Lagerstiften 20 zwischen den beiden Rotorscheiben 6a beidseitig an jeder Rotorscheibe 6a schwenkbar gelagert. Insbesondere ist mindestens eine Rotorscheibe 6a mit der Welle 5 verbunden. Vorteilhafterweise umfassen die horizontal angeordneten Statorflügel 13 jeweils eine Vertiefung zur vollständigen Aufnahme der Rotorscheiben 6a, so dass die sich zugewandten Innenflächen der Rotorscheiben 6a jeweils bündig mit der Innenfläche des jeweiligen horizontal angeordneten Statorflügels 13 abschließen. Vorzugsweise verlaufen die Lagerstifte 22 in vertikaler Richtung vollständig durch die Rotorflügel 7 und verbinden die beiden Rotorscheiben 6a miteinander. Insbesondere ist die Welle 5 nur mit einer Rotorscheibe 6a verbunden. Dadurch verläuft die Welle 5 nicht mehr vollständig durch die Mitte des Vertikalrotors 4 und es werden Luftverwirbelungen im Inneren des Vertikalrotors 4 minimiert.

Fig. 9, Fig. 10 und Fig. 11 zeigen zudem eine weitere vorteilhafte Ausgestaltung der Erfindung. Dabei ist an den in Richtung der Frontalanströmung 2 gesehen hinteren freien Enden der vertikalen Statorflügel 12 jeweils ein Zusatzflügel 22 angeordnet. Die Zusatzflügel dienen der Strömungsoptimierung, indem sie einen Unterdruck am Ende des Statorflügels 12 zusätzlich erzeugen beziehungsweise steuern können.

Die Zusatzflügel 22 haben vorzugsweise eine Ausdehnungsfläche entlang der Frontalanströmung 2 von 15 % bis 30 % der Ausdehnungsfläche entlang der Frontalanströmung 2 der vertikalen Statorflügel 12. Dabei ist jeder Zusatzflügel 22 insbesondere derart an dem vertikalen Statorflügel 12 angeordnet, dass 15 % bis 30 % seiner Ausdehnungsfläche entlang der Frontalanströmung 2 über das Ende der vertikalen Statorflügel 12 hinausragt.

Bei einer vorteilhaften Ausgestaltung der zweigeteilten vertikalen Statorflügel 12 mit einer außenliegenden Tragflächenseite 17 und einer innenliegenden Tragflächenseite 9 ist der Zusatzflügel 22 am freien Ende der außenliegenden Tragflächenseite 17 angeordnet.

Die vorteilhafte Ausgestaltung mit Zusatzflügeln 22 wäre auch bei den Ausführungsformen gemäß Fig. 1 bis Fig. 4 möglich.

In einer weiteren nicht dargestellten vorteilhaften Ausführungsform können die Oberflächen beziehungsweise die Tragflächen der Rotorflügel mechanisch verlängert oder verkürzt werden, insbesondere ähnlich wie bei einem Flügel eines Flugzeugs. Bei schwachen Winden, insbesondere bei Windgeschwindigkeiten kleiner als 5,5 m/s bis 12 m/s, insbesondere 7 m/s, werden die Tragflächen vollständig ausgefahren, so dass eine größere Windangriffsfläche geboten wird. Vorzugsweise bei Windstärken größer als 5,5 m/s bis 12 m/s, insbesondere 7 m/s, werden die Tragflächen des Rotorflügels ineinandergeschoben. Die Mechanik ist vorteilhafterweise über eine Fliehkraftregelung gesteuert, wobei bei kleinen Umdrehungszahlen des Rotors die Mechanik der Rotorflügel die Tragflächenseiten mittels einer der Fliehkraft entgegenwirkenden Federkraft maximal ausfährt und ab einer bestimmten Umdrehungszahl die Fliehkraft größer ist als die Federkraft, so dass die Mechanik des Rotorflügels über die Fliehkraft die Tragflächen einfährt. Dies ermöglicht eine Trimmung der Größe der Rotorflügel an die jeweilige Windgeschwindigkeit.

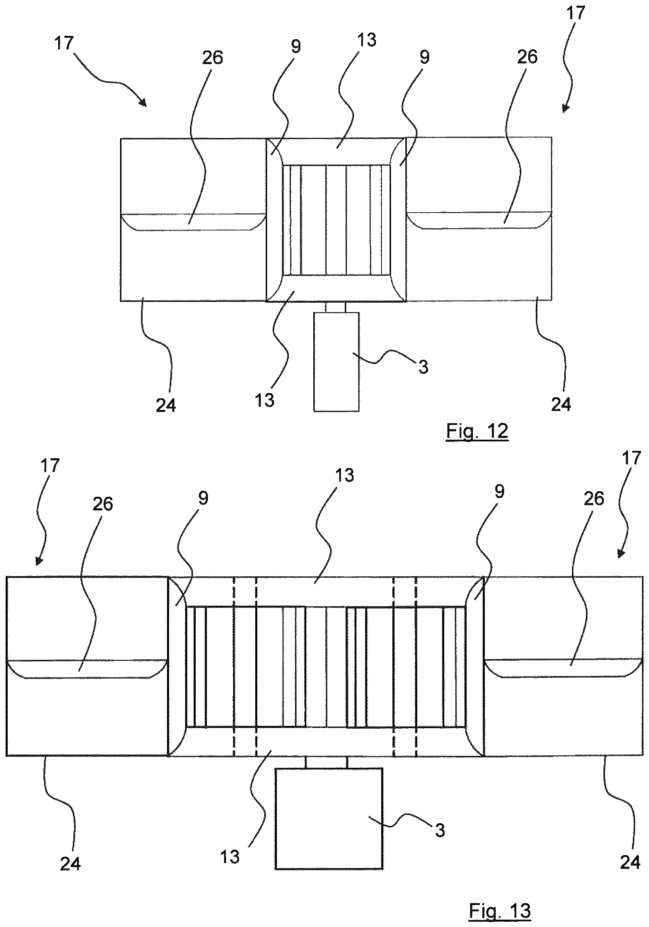

Vorteilhafterweise sind als Weiterbildung der Ausführungsform mit zweigeteilten vertikalen Statorflügeln 12 und mit Solarzellen auf den Tragflächenseiten 17 die Tragflächenseiten 17 horizontal verstellbar ausgebildet. Vorteilhafterweise weisen die Tragflächenseiten 17 dazu ein umlaufendes Rahmenelement 24 auf, in dem ein mit den Solarzellen belegtes Trägerelement 26 an einer horizontal verlaufenden Achse drehbar gelagert ist. Die horizontale Verstellbarkeit der Tragflächenseiten 17 ermöglicht bei besonders geringen Windgeschwindigkeiten eine optimale Ausrichtung der Solarzellen. Dabei werden vorzugsweise die horizontal ausgerichteten Tragflächenseiten 17 mittels einer Azimutsteuerung an den Verlauf der Sonne in Abhängigkeit der aktuellen Ausrichtung der Windkraftanlage angepasst. In Fig. 12 ist eine Frontalansicht einer Windkraftanlage mit einem Rotor mit zweigeteilten vertikalen Statorflügeln 12 und horizontal verstellbaren außenliegenden Tragflächenseiten 17 dargestellt. In der dargestellten Position gemäß Fig. 12 sind die außenliegenden Tragflächenseiten 17 ausgefahren und in eine horizontale Position gestellt. Fig. 13 zeigt eine zweirotorige Ausführungsform mit ausgefahrenen und in eine horizontale Position gestellten außenliegenden Tragflächenseiten 17.

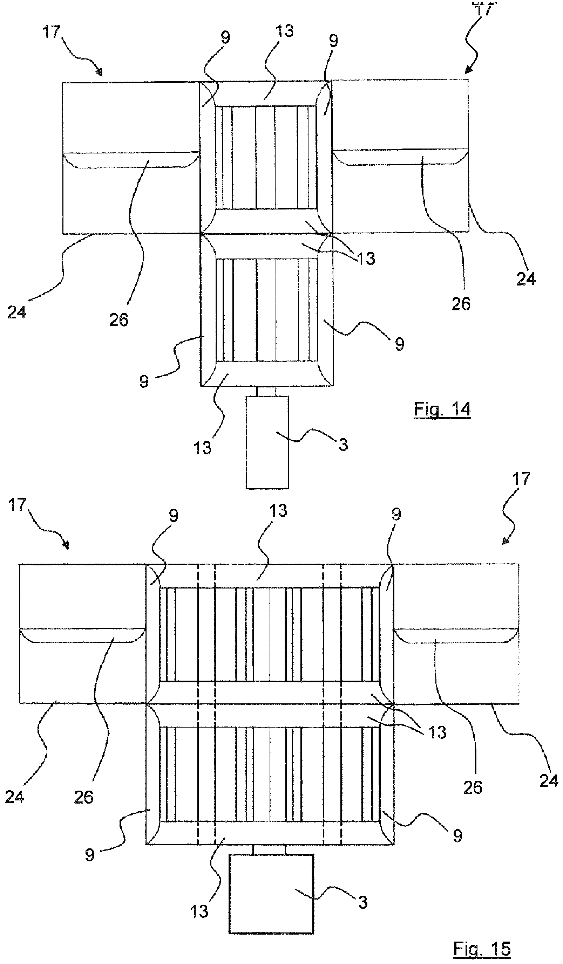

Analog zu Fig. 6 und Fig. 8 können grundsätzlich verschiedene Ausführungsformen der Vertikalrotoren als Module zu verschiedenen erfindungsgemäßen Windkraftanlagen zusammengefügt werden. Fig. 14 und Fig. 15 zeigen Frontalansichten verschiedener Ausführungsformen von erfindungsgemäßen Windkraftanlagen mit jeweils einem Vertikalrotor mit zweigeteilten vertikalen Statorflügeln 12 und horizontal verstellbaren außenliegenden Tragflächenseiten 17 und einem dazu koaxial angeordneten Vertikalrotor ohne zweigeteilte Statorflügel 12.

### Bezugszeichenliste

- 1: Windkraftanlage
- 2: Frontalanströmung
- 3: Stator
- 4: Vertikalrotor
- 5: Welle
- 6: Verbindungsvorrichtung
- 6a: Rotorscheiben
- 7: Rotorflügel
- 71: vordere Flügelspitze
- 72: hintere Flügelspitze
- 8: Einleitflächenkonstruktion
- 9: Innenfläche
- 11: Kreislaufbahn
- 12: vertikal angeordneter Statorflügel
- 13: horizontal angeordneter Statorflügel
- 14: Randbereich
- 16: gemeinsamer vertikaler Statorflügel
- 17: außenliegende Tragflächenseiten
- 18: Trichter
- 20: Lagerstifte
- 22: Zusatzflügel
- 24: Rahmenelement
- 26: Trägerelement

- X: Drehachse
- D: Drehrichtung
- S: Schwenkachse
- α: Winkel

## Patentansprüche

1. Windkraftanlage zur Energieerzeugung durch Frontalanströmung (2) aufweisend einen Stator (3) und mindestens einen durch einen Vertikalrotor (4) angetriebenen Generator, wobei der Vertikalrotor (4) um eine vertikale Drehachse (X) drehbar mit dem Stator (3) verbunden ist, wobei an dem Vertikalrotor (4) mindestens drei mittels einer Verbindungsvorrichtung (6) befestigte Rotorflügel (7) angeordnet sind, wobei die Rotorflügel (7) an der Verbindungsvorrichtung (6) für eine gleiche Drehrichtung (D) ausgerichtet sind, und wobei der Stator (3) eine Einleitflächenkonstruktion (8) mit mindestens vier Innenflächen (9) aufweist, die den Vertikalrotor (4) umrahmen, wobei die Rotorflügel (7) im horizontalen Querschnitt tragflächenartig ausgebildet sind und die Einleitflächenkonstruktion (8) zwei sich gegenüberliegende, im horizontalen Querschnitt tragflächenartige, vertikal angeordnete Statorflügel (12) und zwei sich gegenüberliegende, horizontal angeordnete Statorflügel (13) umfasst, wobei die Statorflügel (12, 13) derart ausgebildet und angeordnet sind, dass sie einen durch die Frontalanströmung (2) erzeugten und durch die Einleitflächenkonstruktion (8) des Stators (3) strömenden Luftstrom zumindest in einem entlang der Innenflächen (9) der vertikal angeordneten Statorflügel (12) verlaufenden Randbereich (14) beschleunigen, wobei der Randbereich (14) eine horizontal und senkrecht zur Frontalanströmung (2) verlaufende Breite aufweist, die gleich oder kleiner eines Betrages eines horizontal und senkrecht zur Frontalanströmung (2) breitesten Abschnitts der vertikal angeordneten Statorflügel (12) ist, wobei die Rotorflügel (7) derart an einem äußeren Rand des Vertikalrotors (4) angeordnet und ausgebildet sind, dass die Rotorflügel (7) während einer Rotation des Vertikalrotors (4) vollständig in den jeweiligen Randbereich (14) des Stators (3) eintauchen,
**dadurch gekennzeichnet, dass**
die Statorflügel (12, 13) der Einleitflächenkonstruktion (8) in einem Grundzustand jeweils eine zur Drehachse (X) radial außenliegende Tragflächenseite (17) und die zur Drehachse (X) radial innenliegende als Tragflächenseite ausgebildete Innenfläche (9) aufweisen, wobei die zur Drehachse (X) radial innenliegenden Innenflächen (9) fixiert sind, und die jeweils zur Drehachse (X) radial außenliegenden Tragflächenseiten (17) der Statorflügel (12, 13) in einem Schwenkzustand jeweils um eine Längskante der jeweiligen Statorflügel (12, 13) im Eintrittsbereich der Frontalanströmung (2) schwenkbar sind, um einen Trichter (18) zu bilden.

2. Windkraftanlage zur Energieerzeugung durch Frontalanströmung (2) gemäß dem Oberbegriff des Anspruchs 1
**dadurch gekennzeichnet, dass**
die Verbindungsvorrichtung (6) zwei sich horizontal erstreckende Rotorscheiben (6a) umfasst, zwischen denen die Rotorflügel (7) schwenkbar gelagert angeordnet sind.

3. Windkraftanlage nach Anspruch 1 oder 2,
**dadurch gekennzeichnet, dass**
die Rotorflügel (7) über eine in der Verbindungsvorrichtung (4) gelagerte und vertikal angeordnete Schwenkachse (S) von einer Ausgangsstellung bei Stillstand des Vertikalrotors (4) in eine Maximalstellung schwenken, wobei die Rotorflügel (7) ihre Maximalstellung bei Erreichen einer definierten Rotationsgeschwindigkeit des Vertikalrotors (4) einnehmen, wobei die Rotorflügel (7) mit steigender Rotationsgeschwindigkeit in Richtung der Maximalstellung unter Einwirkung von Zentrifugalkräften geschwenkt werden.

4. Windkraftanlage nach einem der Ansprüche 1 bis 3,
**dadurch gekennzeichnet, dass** die Rotorflügel (7) eine in Drehrichtung (X) weisende vordere Flügelspitze (71) und eine der Drehrichtung (X) abgewandte hintere Flügelspitze (72) aufweisen, und dass die Rotorflügel (7) jeweils derart schwenkbar über die Verbindungsvorrichtung (6) an dem Vertikalrotor (4) gelagert sind, dass sich der radiale Abstand der hinteren Flügelspitze (72) des jeweiligen Rotorflügels (7) zur Drehachse (X) mit steigender Rotationsgeschwindigkeit vergrößert.

5. Windkraftanlage nach Anspruch 4,
**dadurch gekennzeichnet, dass** die Rotorflügel (7) jeweils derart schwenkbar über die Verbindungsvorrichtung (6) an dem Vertikalrotor (4) gelagert sind, dass sich der radiale Abstand der vorderen Flügelspitze (71) des jeweiligen Rotorflügels (7) zur Drehachse (X) mit steigender Rotationsgeschwindigkeit reduziert.

6. Windkraftanlage nach einem der Ansprüche 1 bis 5,
**dadurch gekennzeichnet, dass** die Rotorflügel (7) ab einer Windgeschwindigkeit der Frontalanströmung (2) von größer gleich 3 m/s bis von größer gleich 5 m/s derart eine Schwenkposition einnehmen, dass sich der radiale Abstand der hinteren Flügelspitze (72) des jeweiligen Rotorflügels (7) zur Drehachse (X) mit steigender Rotationsgeschwindigkeit vergrößert.

7. Windkraftanlage nach einem der Ansprüche 1 bis 6,
**dadurch gekennzeichnet, dass** die Rotorflügel (7) bei einer Windgeschwindigkeit der Frontalanströmung (2) von kleiner gleich 3 m/s bis kleiner gleich 5 m/s durch auf die Rotorflügel (7) wirkende Zentrifugalkraft entgegenwirkende Einzugsmittel in der Ausgangsstellung eingezogen oder gehalten werden.

8. Windkraftanlage nach Anspruch 7,
**dadurch gekennzeichnet, dass** das mindestens eine Einzugsmittel eine Feder ist.

9. Windkraftanlage Anspruch 7 oder 8,
**dadurch gekennzeichnet, dass** das mindestens eine Einzugsmittel derart eingestellt ist, dass die Rotorflügel (7) bis zu einer Umdrehung des Vertikalrotors (4) von kleiner gleich 60 bis kleiner gleich 80 Umdrehungen pro Minute in ihrer Maximalstellung verbleiben.

10. Windkraftanlage nach einem der Ansprüche 1 bis 9,
**dadurch gekennzeichnet, dass** die Rotorflügel (7) jeweils einen symmetrischen, horizontalen Tragflächenquerschnitt entlang der Frontalanströmung (2) aufweisen.

11. Windkraftanlage nach einem der Ansprüche 1 bis 10,
**dadurch gekennzeichnet, dass** die Rotorflügel (7) jeweils einen derart asymmetrischen, horizontalen Tragflächenquerschnitt entlang der Frontalanströmung (2) aufweisen, dass eine zur Drehachse (X) radial außenliegende Tragflächenseite des Rotorflügels (7) stärker ausgebaucht ist als eine radial innenliegende Tragflächenseite des Rotorflügels (7).

12. Windkraftanlage nach einem der Ansprüche 1 bis 11,
**dadurch gekennzeichnet, dass** die Länge der Rotorflügel (7) von ihrer vorderen Flügelspitze (71) zu ihrer hinteren Flügelspitze (72) jeweils mindestens ein Achtundvierzigstel und maximal ein Sechstel, bevorzugt ein Zwölftel eines Gesamtumfangs ihrer Kreislaufbahn (11) beträgt.

13. Windkraftanlage nach einem der Ansprüche 1 bis 12,
**dadurch gekennzeichnet, dass** die Drehachsen (X) mindestens zweier Vertikalrotoren (X) parallel zueinander angeordnet sind, wobei die mindestens beiden Vertikalrotoren (4) einen gemeinsamen vertikalen Statorflügel (16) teilen, der einen symmetrischen, horizontalen Tragflächenschnitt entlang der Frontalanströmung (2) aufweist.

14. Windkraftanlage nach einem der Ansprüche 1 bis 13,
**dadurch gekennzeichnet, dass** die Drehachsen (X) mindestens zweier Vertikalrotoren (4) koaxial zueinander angeordnet sind, wobei die mindestens beiden Vertikalrotoren (4) einen gemeinsamen horizontalen Statorflügel teilen, der einen symmetrischen vertikalen Tragflächenschnitt entlang der Frontalanströmung (2) aufweist.

15. Windkraftanlage nach einem der Ansprüche 1 bis 14,
**dadurch gekennzeichnet, dass** die Länge in Richtung der Frontalanströmung (2) der äußersten vertikalen Statorflügel (12) und/ oder der äußersten horizontalen Statorflügel (13) jeweils größer ist als der Durchmesser der Kreislaufbahn (11) der jeweiligen Rotorflügel (7).

16. Windkraftanlage nach Anspruch 15,
**dadurch gekennzeichnet, dass** die sich gegenüberliegenden, zur Drehachse (X) radial außenliegenden Tragflächenseiten (17) als Trichter (18) im Schwenkzustand einen Winkel (α) einschließen, der zwischen 90° bis 125° beträgt.

17. Windkraftanlage nach Anspruch 15 oder 16,
**dadurch gekennzeichnet, dass** die den Trichter (18) bildenden Tragflächenseiten (17) Solarzellen aufweisen.

18. Windkraftanlage nach Anspruch 17,
**dadurch gekennzeichnet, dass die** den Trichter (18) bildenden Tragflächenseiten (17) horizontal verstellbar ausgebildet sind.

19. Windkraftanlage nach einem der Ansprüche 1 bis 18,
**dadurch gekennzeichnet, dass** die den Trichter bildenden Tragflächenseiten (17) bei einer Windgeschwindigkeit der Frontalanströmung (2) von bevorzugt zwischen 2,5 bis 4 m/s, besonders bevorzugt zwischen 3 bis 3,5 m/s, in den Grundzustand der Statorflügel (12, 13) der Einleitflächenkonstruktion (8) zurückschwenken.

20. Windkraftanlage nach einem der Ansprüche 1 bis 19,
**dadurch gekennzeichnet, dass** die Windkraftanlage (1) ein Schneckengetriebe aufweist, das zwischen dem Stator (3) und einer Befestigungsvorrichtung angeordnet ist, um die Windkraftanlage (1) dem Wind nachzuführen.

21. Windkraftanlage nach einem der Ansprüche 1 bis 20,
**dadurch gekennzeichnet, dass** die horizontal angeordneten Statorflügel (13) im vertikalen Querschnitt tragflächenartig ausgebildet sind.

22. Windkraftanlage nach einem der Ansprüche 1 bis 21,
**dadurch gekennzeichnet, dass** die Tragflächen der Rotorflügel (7) mechanisch verlängerbar oder verkürzbar ausgebildet sind.

23. Einleitflächenkonstruktion eines Stators einer Windkraftanlage (1) aufweisend mindestens vier Innenflächen (9) und mindestens zwei sich gegenüberliegende, im horizontalen Querschnitt tragflächenartige, vertikal angeordnete Statorflügel (12) und mindestens zwei sich gegenüberliegende, horizontal angeordnete Statorflügel (13), wobei die Statorflügel (12, 13) derart ausgebildet und angeordnet sind, dass sie einen durch eine Frontalanströmung (2) erzeugten und durch die Einleitflächenkonstruktion (8) strömenden Luftstrom zumindest in einem entlang der Innenflächen (9) der vertikal angeordneten Statorflügel (12) verlaufenden Randbereich (14) beschleunigen, wobei der Randbereich (14) eine horizontal und senkrecht zur Frontalanströmung (2) verlaufende Breite aufweist, die gleich oder kleiner eines Betrages eines horizontal und senkrecht zur Frontalanströmung (2) breitesten Abschnitts der vertikal angeordneten Statorflügel (12) ist,
**dadurch gekennzeichnet, dass**
die Statorflügel (12, 13) in einem Grundzustand jeweils eine zur Drehachse (X) radial außenliegende Tragflächenseite (17) und die zur Drehachse (X) radial innenliegende als Tragflächenseite ausgebildete Innenfläche (9) aufweisen, wobei die zur Drehachse (X) radial innenliegenden Innenflächen (9) fixiert sind, und die jeweils zur Drehachse (X) radial außenliegenden Tragflächenseiten (17) der Statorflügel (12, 13) in einem Schwenkzustand jeweils um eine Längskante der jeweiligen Statorflügel (12, 13) im Eintrittsbereich der Frontalanströmung (2) schwenkbar sind, um einen Trichter (18) zu bilden.

24. Einleitflächenkonstruktion gemäß Anspruch 23,
**gekennzeichnet durch**
die Merkmale der kennzeichnenden Teile von mindestens einem der Ansprüche 16 bis 19 oder 21.

## Claims

1. Wind power plant for power generation by way of head-on incident flow (2) having a stator (3) and at least one generator which is driven by way of a vertical rotor (4), the vertical rotor (4) being connected to the stator (3) such that it can be rotated about a vertical rotational axis (X), at least three rotor blades (7) which are fastened by means of a connecting apparatus (6) being arranged on the vertical rotor (4), the rotor blades (7) being oriented on the connecting apparatus (6) for an identical rotational direction (D), and the stator (3) having an inlet surface construction (8) with at least four inner faces (9) which frame the vertical rotor (4), the rotor blades (7) being of wing-like configuration in horizontal cross section, and the inlet surface construction (8) having two vertically arranged stator blades (12) which lie opposite one another and are wing-like in horizontal cross section, and two horizontally arranged stator blades (13) which lie opposite one another, the stator blades (12, 13) being configured and arranged in such a way that they accelerate an air flow which is produced by way of the head-on incident flow (2) and flows through the inlet surface construction (8) of the stator (3) at least in an edge region (14) which runs along the inner faces (9) of the vertically arranged stator blades (12), the edge region (14) having a width which runs horizontally and perpendicularly with respect to the head-on incident flow (2) and is less than or equal to a magnitude of a section of the vertically arranged stator blades (12) which is widest horizontally and perpendicularly with respect to the head-on incident flow (2), the rotor blades (7) being arranged and configured on an outer edge of the vertical rotor (4) in such a way that the rotor blades (7) dip completely into the respective edge region (14) of the stator (3) during a rotation of the vertical rotor (4), **characterized in that** the stator blades (12, 13) of the inlet surface construction (8) in each case have, in a basic state, a wing side (17) which lies radially on the outside with respect to the rotational axis (X) and the inner face (9) which lies radially on the inside with respect to the rotational axis (X) and is configured as a wing side, the inner faces (9) which lie radially on the inside with respect to the rotational axis (X) being fixed, and the wing sides (17) of the stator blades (12, 13), which wing sides (17) in each case lie radially on the outside with respect to the rotational axis (X), are pivotable in a pivoting state in each case about a longitudinal edge of the respective stator blades (12, 13) in the inlet region of the head-on incident flow (2), in order to form a funnel (18).

2. Wind power plant for power generation by way of head-on incident flow (2) according to the precharacterizing clause of Claim 1, **characterized in that** the connecting apparatus (6) comprises two horizontally extending rotor discs (6a), between which the rotor blades (7) are arranged in a pivotably mounted manner.

3. Wind power plant according to Claim 1 or 2, **characterized in that** the rotor blades (7) pivot from a starting position at a standstill of the vertical rotor (4) into a maximum position via a pivot axle (S) which is mounted in the connecting apparatus (4) and is arranged vertically, the rotor blades (7) assuming their maximum position in the case of a defined rotational speed of the vertical rotor (4) being reached, the rotor blades (7) being pivoted in the direction of the maximum position under the action of centrifugal forces as the rotational speed increases.

4. Wind power plant according to one of Claims 1 to 3, **characterized in that** the rotor blades (7) have a front blade tip (71) which points in the rotational direction (X) and a rear blade tip (72) which faces away from the rotational direction (X), and **in that** the rotor blades (7) are mounted on the vertical rotor (4) via the connecting apparatus (6) in each case such that they can be pivoted in such a way that the radial spacing of the rear blade tip (72) of the respective rotor blade (7) from the rotational axis (X) increases as the rotational speed increases.

5. Wind power plant according to Claim 4, **characterized in that** the rotor blades (7) are mounted on the vertical rotor (4) via the connecting apparatus (6) in each case such that they can be pivoted in such a way that the radial spacing of the front blade tip (71) of the respective rotor blade (7) from the rotational axis (X) decreases as the rotational speed increases.

6. Wind power plant according to one of Claims 1 to 5, **characterized in that**, from a wind speed of the head-on incident flow (2) of from greater than or equal to 3 m/s to greater than or equal to 5 m/s, the rotor blades (7) assume a pivoting position in such a way that the radial spacing of the rear blade tip (72) of the respective rotor blade (7) from the rotational axis (X) increases as the rotational speed increases.

7. Wind power plant according to one of Claims 1 to 6, **characterized in that**, in the case of a wind speed of the head-on incident flow (2) of from less than or equal to 3 m/s to less than or equal to 5 m/s, the rotor blades (7) are retracted or held in the starting position by way of retraction means which counteract the centrifugal force which acts on the rotor blades (7).

8. Wind power plant according to Claim 7, **characterized in that** the at least one retraction means is a spring.

9. Wind power plant according to Claim 7 or 8, **characterized in that** the at least one retraction means is set in such a way that the rotor blades (7) remain in their maximum position up to a revolution of the vertical rotor (4) of from less than or equal to 60 to less than or equal to 80 revolutions per minute.

10. Wind power plant according to one of Claims 1 to 9, **characterized in that** the rotor blades (7) in each case have a symmetrical, horizontal wing cross section along the head-on incident flow (2).

11. Wind power plant according to one of Claims 1 to 10, **characterized in that** the rotor blades (7) in each case have an asymmetrical, horizontal wing cross section along the head-on incident flow (2) which is such that a wing side of the rotor blade (7), which wing side lies radially on the outside with respect to the rotational axis (X), bulges to a more pronounced extent than a wing side of the rotor blade (7), which wing side lies radially on the inside.

12. Wind power plant according to one of Claims 1 to 11, **characterized in that** the length of the rotor blades (7) from the front blade tip (71) to the rear blade tip (72) is in each case at least 1/48 and at most 1/6, preferably 1/12 of an overall circumference of their circulation path (11).

13. Wind power plant according to one of Claims 1 to 12, **characterized in that** the rotational axes (X) of at least two vertical rotors (X) are arranged parallel to one another, the at least two vertical rotors (4) sharing a common vertical stator blade (16) which has a symmetrical, horizontal wing section along the head-on incident flow (2) .

14. Wind power plant according to one of Claims 1 to 13, **characterized in that** the rotational axes (X) of at least two vertical rotors (4) are arranged coaxially with respect to one another, the at least two vertical rotors (4) sharing a common horizontal stator blade which has a symmetrical vertical wing section along the head-on incident flow (2).

15. Wind power plant according to one of Claims 1 to 14, **characterized in that** the length in the direction of the head-on incident flow (2) of the outermost vertical stator blade (12) and/or the outermost horizontal stator blade (13) is in each case greater than the diameter of the circulation path (11) of the respective rotor blade (7) .

16. Wind power plant according to Claim 15, **characterized in that** the wing sides (17) which lie opposite one another and lie radially on the outside with respect to the rotational axis (X) enclose an angle (α) which is between 90° and 125° as a funnel (18) in the pivoting state.

17. Wind power plant according to Claim 15 or 16, **characterized in that** the wing sides (17) which form the funnel (18) have solar cells.

18. Wind power plant according to Claim 17, **characterized in that** the wing sides (17) which form the funnel (18) are of horizontally adjustable configuration.

19. Wind power plant according to one of Claims 1 to 18, **characterized in that**, in the case of a wind speed of the head-on incident flow (2) of preferably between 2.5 and 4 m/s, particularly preferably between 3 and 3.5 m/s, the wing sides (17) which form the funnel pivot back into the basic state of the stator blades (12, 13) of the inlet surface construction (8).

20. Wind power plant according to one of Claims 1 to 19, **characterized in that** the wind power plant (1) has a worm gear mechanism which is arranged between the stator (3) and a fastening apparatus, in order for the wind power plant (1) to track the wind.

21. Wind power plant according to one of Claims 1 to 20, **characterized in that** the horizontally arranged stator blades (13) are of wing-like configuration in vertical cross section.

22. Wind power plant according to one of Claims 1 to 21, **characterized in that** the wing faces of the rotor blades (7) are configured such that they can be lengthened or shortened mechanically.

23. Inlet face construction of a stator of a wind power plant (1) having at least four inner faces (9) and at least two vertically arranged stator blades (12) which lie opposite one another and are aerofoil-like in horizontal cross section, and at least two horizontally arranged stator blades (13) which lie opposite one another, the stator blades (12, 13) being configured and arranged in such a way that they accelerate an air stream which is generated by way of a frontal incident flow (2) and flows through the inlet face construction (8) at least in an edge region (14) which runs along the inner faces (9) of the vertically arranged stator blades (12), the edge region (14) having a width which runs horizontally and perpendicularly with respect to the frontal incident flow (2) and is smaller than or equal to a magnitude of a section of the vertically arranged stator blades (12), which section is widest horizontally and perpendicularly with respect to the frontal incident flow (2), **characterized in that**, in a base state, the stator blades (12, 13) in each case have an aerofoil side (17) which lies radially on the outside with respect to the rotational axis (X) and the inner face (9) which is configured as an aerofoil side and lies radially on the inside with respect to the rotational axis (X), the inner faces (9) which lie radially on the inside with respect to the rotational axis (X) being fixed, and those aerofoil sides (17) of the stator blades (12, 13) which lie in each case radially on the outside with respect to the rotational axis (X) being pivotable in a pivoting state in each case about a longitudinal edge of the respective stator blades (12, 13) in the inlet region of the frontal incident flow (2), in order to form a venturi (18) .

24. Inlet face construction according to Claim 23, **characterized by** the features of the characterizing parts of at least one of Claims 16 to 19 or 21.

## Revendications

1. Éolienne servant à la production d'énergie par arrivée d'écoulement frontale (2), comprenant un stator (3) et au moins un générateur entraîné par un rotor vertical (4), dans laquelle le rotor vertical (4) est relié au stator (3) de manière rotative autour d'un axe de rotation vertical (X), dans laquelle au moins trois pales de rotor (7) fixées au moyen d'un dispositif de liaison (6) sont disposées sur le rotor vertical (4), dans laquelle les pales de rotor (7) sont orientées sur le dispositif de liaison (6) pour un même sens de rotation (D), et dans laquelle le stator (3) comprend une construction de surfaces d'entrée (8) dotée d'au moins quatre surfaces intérieures (9) qui entourent le rotor vertical (4), dans laquelle les pales de rotor (7) sont réalisées en forme de surfaces portantes en section transversale horizontale et la construction de surfaces d'entrée (8) comporte deux pales de stator (12) se faisant face, en forme de surfaces portantes en section transversale horizontale et disposées verticalement et deux pales de stator (13) se faisant face et disposées horizontalement, dans laquelle les pales de stator (12, 13) sont réalisées et disposées de telle sorte qu'elles accélèrent un flux d'air produit par l'arrivée d'écoulement frontale (2) et s'écoulant à travers la construction de surfaces d'entrée (8) du stator (3), au moins dans une région de bord (14) s'étendant le long des surfaces intérieures (9) des pales de stator (12) disposées verticalement, dans laquelle la région de bord (14) présente une largeur s'étendant horizontalement et perpendiculairement à l'arrivée d'écoulement frontale (2), laquelle largeur est inférieure ou égale à une ampleur d'une partie des pales de stator (12) disposées verticalement qui est la plus large horizontalement et perpendiculairement à l'arrivée d'écoulement frontale (2), dans laquelle les pales de rotor (7) sont disposées et réalisées sur un bord extérieur du rotor vertical (4), de telle sorte que les pales de rotor (7) pénètrent complètement dans la région de bord (14) respective du stator (3) pendant une rotation du rotor vertical (4), **caractérisée en ce que** les pales de stator (12, 13) de la construction de surfaces d'entrée (8) comprennent, dans un état de base, respectivement un côté de surface portante (17) situé radialement à l'extérieur par rapport à l'axe de rotation (X) et la surface intérieure (9) située radialement à l'intérieur par rapport à l'axe de rotation (X) et réalisée comme côté de surface portante, les surfaces intérieures (9) situées radialement à l'intérieur par rapport à l'axe de rotation (X) étant fixées, et
les côtés de surface portante (17) des pales de stator (12, 13) situés radialement à l'extérieur par rapport à l'axe de rotation (X) pouvant pivoter dans un état de pivotement respectivement autour d'un bord longitudinal des pales de stator (12, 13) respectives dans la région d'entrée de l'arrivée d'écoulement frontale (2), afin de former un entonnoir (18).

2. Éolienne servant à la production d'énergie par arrivée d'écoulement frontale (2) selon le préambule de la revendication 1,
**caractérisée en ce que**
le dispositif de liaison (6) comporte deux disques de rotor (6a) s'étendant horizontalement, entre lesquels les pales de rotor (7) sont disposées de manière montée de façon à pouvoir pivoter.

3. Éolienne selon la revendication 1 ou 2,
**caractérisée en ce que**
les pales de rotor (7) pivotent, par le biais d'un axe de pivotement (S) monté dans le dispositif de liaison (4) et disposé verticalement, d'une position initiale à l'arrêt du rotor vertical (4) à une position maximale, les pales de rotor (7) adoptant leur position maximale lorsqu'une vitesse de rotation définie du rotor vertical (4) est atteinte, les pales de rotor (7) étant pivotées en direction de leur position maximale sous l'effet de forces centrifuges au fur et à mesure que la vitesse de rotation augmente.

4. Éolienne selon l'une des revendications 1 à 3,
**caractérisée en ce que** les pales de rotor (7) comprennent un bout de pale avant (71) orienté dans le sens de rotation (X) et un bout de pale arrière (72) opposé au sens de rotation (X), et **en ce que** les pales de rotor (7) sont respectivement montées sur le rotor vertical (4) de manière à pouvoir pivoter par le biais du dispositif de liaison (6), de telle sorte que la distance radiale du bout de pale arrière (72) de la pale de rotor (7) respective à l'axe de rotation (X) augmente au fur et à mesure que la vitesse de rotation augmente.

5. Éolienne selon la revendication 4,
**caractérisée en ce que** les pales de rotor (7) sont respectivement montées sur le rotor vertical (4) de manière à pouvoir pivoter par le biais du dispositif de liaison (6), de telle sorte que la distance radiale du bout de pale avant (71) de la pale de rotor (7) respective à l'axe de rotation (X) diminue au fur et à mesure que la vitesse de rotation augmente.

6. Éolienne selon l'une des revendications 1 à 5,
**caractérisée en ce que** les pales de rotor (7) adoptent une position de pivotement à partir d'une vitesse du vent de l'arrivée d'écoulement frontale (2) supérieure ou égale à 3 m/s jusqu'à supérieure ou égale à 5 m/s, de telle sorte que la distance radiale du bout de pale arrière (72) de la pale de rotor (7) respective à l'axe de rotation (X) augmente au fur et à mesure que la vitesse de rotation augmente.

7. Éolienne selon l'une des revendications 1 à 6,
**caractérisée en ce que** les pales de rotor (7) sont rentrées ou maintenues dans la position initiale grâce à des moyens de rentrée s'opposant à la force centrifuge agissant sur les pales de rotor (7), lorsque la vitesse du vent de l'arrivée d'écoulement frontale (2) est inférieure ou égale à 3 m/s jusqu'à inférieure ou égale à 5 m/s.

8. Éolienne selon la revendication 7,
**caractérisée en ce que** l'au moins un moyen de rentrée est un ressort.

9. Éolienne selon la revendication 7 ou 8,
**caractérisée en ce que** l'au moins un moyen de rentrée est réglé de telle sorte que les pales de rotor (7) demeurent dans leur position maximale jusqu'à une rotation du rotor vertical (4) inférieure ou égale à 60 jusqu'à inférieure ou égale à 80 tours par minute.

10. Éolienne selon l'une des revendications 1 à 9,
**caractérisée en ce que** les pales de rotor (7) présentent respectivement une section transversale de surface portante horizontale symétrique le long de l'arrivée d'écoulement frontale (2).

11. Éolienne selon l'une des revendications 1 à 10,
**caractérisée en ce que** les pales de rotor (7) présentent respectivement une section transversale de surface portante horizontale asymétrique le long de l'arrivée d'écoulement frontale (2), de telle sorte qu'un côté de surface portante de la pale de rotor (7) situé radialement à l'extérieur par rapport à l'axe de rotation (X) est plus fortement bombé qu'un côté de surface portante de la pale de rotor (7) situé radialement à l'intérieur.

12. Éolienne selon l'une des revendications 1 à 11,
**caractérisée en ce que** la longueur des pales de rotor (7) de leur bout de pale avant (71) à leur bout de pale arrière (72) vaut respectivement au moins un quarante-huitième et au maximum un sixième, de préférence un douzième d'une circonférence totale de leur trajectoire circulaire (11).

13. Éolienne selon l'une des revendications 1 à 12,
**caractérisée en ce que** les axes de rotation (X) d'au moins deux rotors verticaux (X) sont disposés parallèlement les uns aux autres, les au moins deux rotors verticaux (4) divisant une pale de stator verticale commune (16) qui présente une section transversale de surface portante horizontale symétrique le long de l'arrivée d'écoulement frontale (2).

14. Éolienne selon l'une des revendications 1 à 13,
**caractérisée en ce que** les axes de rotation (X) d'au moins deux rotors verticaux (4) sont disposés de manière coaxiale les uns par rapport aux autres, les au moins deux rotors verticaux (4) divisant une pale de stator horizontale commune qui présente une section transversale de surface portante verticale symétrique le long de l'arrivée d'écoulement frontale (2).

15. Éolienne selon l'une des revendications 1 à 14,
**caractérisée en ce que** la longueur, dans la direction de l'arrivée d'écoulement frontale (2), de la pale de stator verticale (12) la plus à l'extérieur et/ou de la pale de stator horizontale (13) la plus à l'extérieur est respectivement supérieure au diamètre de la trajectoire circulaire (11) de la pale de rotor (7) respective.

16. Éolienne selon la revendication 15,
**caractérisée en ce que** les côtés de surface portante (17) opposés et situés radialement à l'extérieur par rapport à l'axe de rotation (X) forment, comme un entonnoir (18), dans l'état de pivotement, un angle (α) qui vaut entre 90° et 125°.

17. Éolienne selon la revendication 15 ou 16,
**caractérisée en ce que** les côtés de surface portante (17) formant l'entonnoir (18) comprennent des cellules solaires.

18. Éolienne selon la revendication 17,
**caractérisée en ce que** les côtés de surface portante (17) formant l'entonnoir (18) sont réalisés de manière réglable horizontalement.

19. Éolienne selon l'une des revendications 1 à 18,
**caractérisée en ce que** les côtés de surface portante (17) formant l'entonnoir pivotent de manière à revenir à l'état de base des pales de stator (12, 13) de la construction de surfaces d'entrée (8) lorsque la vitesse du vent de l'arrivée d'écoulement frontale (2) est de préférence comprise entre 2,5 et 4 m/s, de manière particulièrement préférée comprise entre 3 et 3,5 m/s.

20. Éolienne selon l'une des revendications 1 à 19,
**caractérisée en ce que** l'éolienne (1) comprend une transmission à vis sans fin qui est disposée entre le stator (3) et un dispositif de fixation, afin de faire suivre à l'éolienne (1) le vent.

21. Éolienne selon l'une des revendications 1 à 20,
**caractérisée en ce que** les pales de stator (13) disposées horizontalement sont réalisées en forme de surfaces portantes en section transversale verticale.

22. Éolienne selon l'une des revendications 1 à 21,
**caractérisée en ce que** les surfaces portantes des pales de rotor (7) sont réalisées de manière à pouvoir être rallongées ou raccourcies mécaniquement.

23. Construction de surface d'entrée d'un stator d'une éolienne (1) comportant au moins quatre surfaces intérieures (9) et au moins deux pales de stator (12) opposées, en forme de surface portante en coupe transversale horizontale et disposées verticalement et au moins deux pales de stator (13) opposées et disposées horizontalement, les pales de stator (12, 13) étant conçues et disposées de manière à accélérer un flux d'air, généré par arrivée d'écoulement frontale (2) et s'écoulant à travers la construction de surfaces d'entrée (8), au moins dans une région de bord (14) qui s'étend le long des surfaces intérieures (9) des pales de stator (12) disposées verticalement, la région de bord (14) ayant une largeur qui s'étend horizontalement et perpendiculairement à l'arrivée d'écoulement frontale (2) et qui est inférieure ou égale à une valeur d'une portion, la plus large horizontalement et perpendiculairement à l'arrivée d'écoulement frontale (2), des pales de stator (12) disposées verticalement,
**caractérisée en ce que**
les pales de stator (12, 13) comportent chacune dans un état de base un côté de surface portante (17) située radialement à l'extérieur par rapport à l'axe de rotation (X) et la surface intérieure (9) située radialement à l'intérieur par rapport à l'axe de rotation (X) et conçue comme un côté de surface portante, les surfaces intérieures (9) situées radialement à l'intérieur par rapport à l'axe de rotation (X) étant fixées, et les côtés de surface portante (17), situés chacun radialement à l'extérieur par rapport à l'axe de rotation (X), des pales de stator (12, 13) pouvant chacun pivoter dans un état de pivotement autour d'un bord longitudinal des pales de stator respectives (12, 13) dans la région d'entrée de l'arrivée d'écoulement frontale (2) pour former un entonnoir (18).

24. Construction de surface d'entrée selon la revendication 23,
**caractérisée par**
les éléments caractéristiques des parties caractérisantes d'au moins une des revendications 16 à 19 ou 21.
